Europäisches Patentamt

European Patent Office

Office européen des brevets

(11) Publication number: **0 620 472 A1**

# EUROPEAN PATENT APPLICATION

(21) Application number: **94105786.1**

(22) Date of filing: **14.04.94**

(51) Int. Cl.⁵: **G02F 1/1343**, G02F 1/1339, G02F 1/136

(30) Priority: **14.04.93 JP 87041/93**

(43) Date of publication of application:
**19.10.94 Bulletin 94/42**

(84) Designated Contracting States:
**DE NL**

(71) Applicant: **MATSUSHITA ELECTRIC INDUSTRIAL CO., LTD.**
**1006, Ohaza Kadoma**
**Kadoma-shi, Osaka 571 (JP)**

(72) Inventor: **Tsuda, Keisuke**
**1-48-8-207, Tarumi-cho**
**Suita-shi, Osaka (JP)**
Inventor: **Wakemoto, Hirofumi**
**Oakhills Kori 5-703,**
**30, Miiminamimachi**
**Neyagawa-shi, Osaka (JP)**
Inventor: **Hattori, Katsuji**
**1-16-4, Tsukimiyama**
**Takarazuka-shi, Hyogo-ken (JP)**

(74) Representative: **Schwabe - Sandmair - Marx**
**Stuntzstrasse 16**
**D-81677 München (DE)**

(54) **A liquid crystal display panel and a method for producing the same.**

(57) A liquid crystal display panel including: a first substrate (1a) and a second substrate (1b); a plurality of electrodes (2) having a predetermined thickness and being interposed between the first substrate (1a) and the second substrate (1b) so as to maintain the first substrate and the second substrate at a distance defined by the predetermined thickness, the plurality of electrodes (2) extending in a first direction and being disposed parallel to one another; and nematic liquid crystal (4) filled in an interspace created by the plurality of electrodes and the first substrate and the second substrate, wherein an orientation of the nematic liquid crystal is varied by applying a voltage between the adjoining plurality of electrodes.

Fig. 1A

Fig. 1B

## BACKGROUND OF THE INVENTION

1. Field of the Invention:

The present invention relates to a liquid crystal panel for displaying an image.

2. Description of the Related Art:

An active matrix type driving method using TFTs (Thin Film Transistors) as switching elements is often adopted for a display device so as to display high quality images. The reason is that, the active matrix method makes it possible to achieve a high contrast ratio irrespective of the number of scanning electrodes, and to obtain clear images even when displaying a large-capacity image with a high resolution, as compared with a simple matrix driving method, which does not use switching elements.

In such an active matrix type liquid crystal display device, an NW (Normally White) mode, incorporating a TN (Twisted Nematic) configuration, is often used. The TN configuration is characterized by the 90° twisted orientation of the nematic liquid crystal molecules. In the NW mode, the two polarizing plates are attached to the liquid crystal panel in such a manner that the respective polarizing axes thereof are perpendicular to each other, and the polarizing axis of one of the polarizing plates is parallel or perpendicular to the longer axis of each liquid crystal molecule in contact with one of the substrates. According to the NW mode using the TN configuration, the display device is in a white state when no voltage or a low voltage below a threshold voltage value is applied to the interspace between the substrates; the display device is in a black state when a voltage higher than the above-mentioned low voltage is applied.

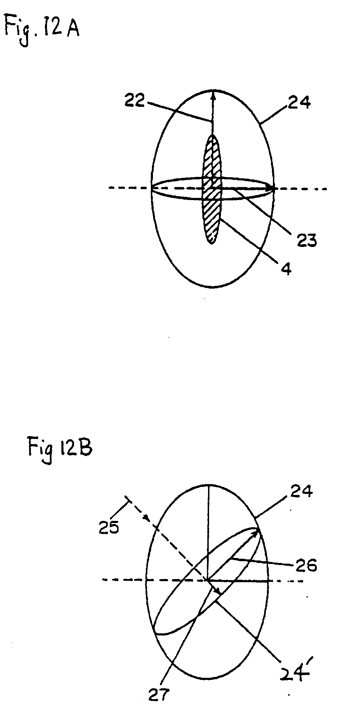

When a voltage is applied to the liquid crystal panel, the liquid crystal molecules align along the direction of the applied electric field while unwinding their twisted structure. As with the change in the molecule orientation, the polarization characteristics of light transmitted through the liquid crystal panel are changed, whereby the light transmittance is modified. These polarization characteristics are varied by the birefringence of the liquid crystal. Generally, the shape of a liquid crystal molecule used in the TN configuration is compared to a stick. Each liquid crystal molecule is considered to be a birefringent medium having an optical axis along the direction of the longer axis of such a stick-like configuration. As is shown in Figure **12A**, a vector **22** representing a refractive index of a liquid crystal molecule **4** taken in the direction of the longer axis thereof is greater than a vector **23** representing a refractive index of the liquid crystal molecule **4** taken in the direction of the shorter axis thereof. Thus, the liquid crystal molecule **4** constitutes a refractive index ellipsoid **24**.

The polarization characteristics of the liquid crystal panel depend on a retardation R. The retardation R is obtained by multiplying a thickness dl of the liquid crystal layer by an anisotropy Δ nl of refractive index with respect to the direction in which a light beam enters the liquid crystal layer. As is shown in Figure **12B**, the value of the refractive index anisotropy Δ nl is derived by using an ellipse **24'** defined as a cross section of the refractive index ellipsoid **24** taken at a plane of which the normal line is the direction in which a light beam **25** enters. Specifically, the refractive index anisotropy Δ nl is defined as the difference between the longer axis **26** and the shorter axis **27** of the ellipse **24'**.

According to the NW mode using the TN configuration, applying a sufficiently high voltage to the liquid crystal panel results in aligning all the liquid crystal molecules, ideally, so that the longer axis of each liquid crystal molecule lies in the direction in which the voltage is applied (i.e. the direction of the normal axis of the substrates). Accordingly, a light beam entering in the normal axis direction of the substrates is transmitted along the direction of the optical axis of the liquid crystal molecules, so that the refractive index anisotropy Δ nl becomes zero, which in turn makes the retardation R zero. In this case, a light beam entering the liquid crystal panel is transmitted through the liquid crystal layer while maintaining the polarization direction as polarized by the polarizing plate at which the light beam enters (hereinafter referred to as the 'first polarizing plate', so as to reach the polarizing plate through which the light beam goes out (hereinafter referred to as the 'second polarizing plate'). The second polarizing plate, since it has a polarizing axis disposed at 90° with respect to that of the first polarizing plate, completely interrupts the light beam. This means no light is transmitted, thereby placing the liquid crystal panel into a black state.

A conventional liquid crystal display device of the above-mentioned NW mode using the TN configuration has the following problems: In the case of the NW mode, if the liquid crystal molecules stand completely perpendicular to the substrates due to the application of a voltage, the liquid crystal panel displays a black image when viewed in the direction perpendicular to the substrate. However, the liquid crystal panel no longer displays a black image when light enters at an angle oblique with respect to the normal axis of the substrates and at an angle with the direction of the polarizing axis of the polarizing plate, even if the liquid crystal molecules stand completely perpendicularly. This phenomenon is most outstanding when, in the case of the NW mode, the light enters at 45° with respect to the polarizing axis. Such a light beam, obliquely entering the liquid crystal panel, travels through the liquid crystal panel obliquely with respect to the optical axis of each liquid crystal molecule. This means that the refractive index anisotropy $\Delta$ nl is not zero, which indicates that the retardation R is not zero. As a result, the incident linearly polarized light is influenced so as to have a component transmittable through the second polarizing plate, thereby preventing the displayed image from being completely black.

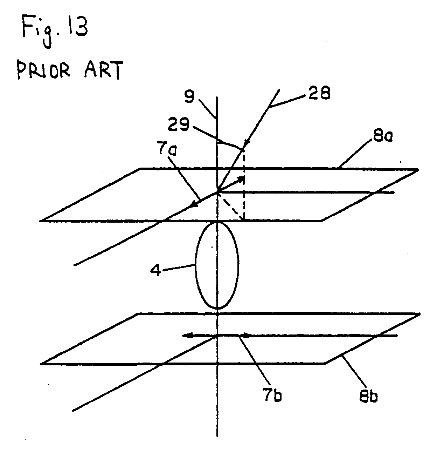

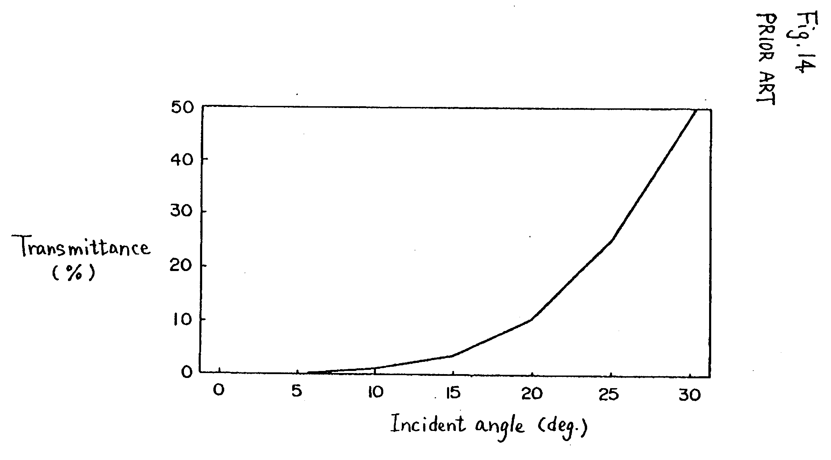

Hereinafter, the light transmittance of a liquid crystal display device of the NW mode using the TN configuration will be considered, with reference to Figure **13**. It is assumed that, as is ideal, all the liquid crystal molecules **4** have stood in the direction of a normal axis **9** of the substrates, as is shown in Figure **13**. It is also assumed that a light beam **28** enters the liquid crystal display device at 45° with respect to a polarizing axis **7a** of a first polarizing plate **8a**, and at an incident angle **29** with respect to the normal axis **9** of the substrates; a polarizing axis **7a** of the first polarizing plate **8a** is perpendicular to a polarizing axis **7b** of a second polarizing plate **8b**. In this exemplary case, the light transmittance and incident angles have the relationship shown in Figure **14**. The retardation R $(= \Delta n \times 0.5 \ \mu m)$ is 0.5 $\mu m$.

As is seen from Figure **14**, according to the NW mode using the TN configuration, the incident angle dependence, that is, the viewing angle dependence of the display quality is very large when a black image is displayed by the liquid crystal display device. For example, the light transmittance decreases to 50% when the incident angle is about 30°. In addition, the liquid crystal molecules present in the vicinity of the interface between either the substrate and the liquid crystal layer have so much interaction with the substrates that in practice they do not stand completely. Furthermore, the liquid crystal molecules in the central portion of the liquid crystal layer do not stand completely, either. Thus, the viewing angle dependence when a black image is displayed is increased even more.

As has been described, a liquid crystal panel having a large viewing angle dependence has different luminances depending on the viewing angle. As a result, the display quality of the liquid crystal panel deteriorates, making it difficult for a viewer to look at a displayed image.

## SUMMARY OF THE INVENTION

A liquid crystal display panel of the invention includes: a first substrate and a second substrate; a plurality of electrodes having a predetermined thickness and being interposed between the first substrate and the second substrate so as to maintain the first substrate and the second substrate at a distance defined by the predetermined thickness, the plurality of electrodes extending in a first direction and being disposed parallel to one another; and nematic liquid crystal filled in an interspace created by the plurality of electrodes and the first substrate and the second substrate, wherein an orientation of the nematic liquid crystal is varied by applying a voltage between the adjoining plurality of electrodes.

In one embodiment of the invention the liquid crystal display panel further includes alignment films formed on facing surfaces of the first substrate and the second substrate, the alignment films being rubbed in a cross direction to the first direction.

In another embodiment of the invention the alignment films are Langmuir-Blodgett's films.

According to another aspect of the invention, a liquid crystal display panel includes: a first substrate and a second substrate maintained substantially parallel to each other; nematic liquid crystal filled in an interspace between the first substrate and the second substrate; a plurality of first electrodes formed on a face of the first substrate that is in contact with the nematic liquid crystal, the plurality of first electrodes extending in a first direction; a plurality of second electrodes formed on a face of the second substrate that is in contact with the nematic liquid crystal so as not to be located above the plurality of first electrodes, the plurality of second electrodes extending in the first direction, wherein an orientation of the nematic liquid crystal is varied by applying a voltage between the plurality of first electrodes and the plurality of second electrodes.

According to still another aspect of the invention, a liquid crystal display panel includes: a first substrate and a second substrate maintained substantially parallel to each other; nematic liquid crystal filled in an interspace between the first substrate and the second substrate; a plurality of first electrodes formed on a face of the first substrate that is in contact with the nematic liquid crystal and a face of the second substrate that is in contact with the nematic liquid crystal, the plurality of first electrodes extending in a first direction and each of the first electrodes formed on the first substrate opposing one of the first electrodes formed on the second substrate; and a plurality of second electrodes formed on a face of the second substrate that is in contact with the nematic liquid crystal and a face of the second substrate that is in contact with the nematic liquid crystal, the plurality of second electrodes extending in a first direction and each of the second electrodes formed on the first substrate opposing one of the second electrodes formed on the second substrate; wherein an orientation of the nematic liquid crystal is varied by applying a voltage between at least one of the first electrodes and at least one of the second electrodes.

According to still another aspect of the invention, a liquid crystal display panel comprising a plurality of pixels in a matrix shape, each of the plurality of pixels including: a first substrate and a second substrate maintained substantially parallel to each other; nematic liquid crystal filled in an interspace between the first substrate and the second substrate; a source signal line formed on one of two opposing sides of a rectangle defined by the pixel, the source signal line extending in a first direction; a stripe-shaped common electrode formed on at least one of the first substrate and the second substrate and disposed on the other one of the rectangle defined by the pixel, the common electrode extending in the first direction; a gate scanning line formed on the first substrate and extending in a second direction; a thin film transistor having a source, a drain, a portion of the gate scanning line as a gate electrode, the source electrically connected with the source signal line, the thin film transistor being formed on the first substrate; and a stripe-shaped pixel electrode formed on the first substrate and disposed adjoining the source signal line nearer a center of the pixel with respect to the source signal line, the pixel electrode extending in the first direction and being electrically connected with the drain, wherein the pixel electrode is used for applying an electric field to the nematic liquid crystal in accordance with an operation of the thin film transistor.

In one embodiment of the invention, each of the pixel electrode and the common electrode has a predetermined thickness so as to maintain the first substrate and the second substrate at a distance defined by the predetermined thickness.

In another embodiment of the invention, each pixel further includes a second pixel electrode formed in a portion of the second substrate corresponding to a portion where the pixel electrode is formed, the second pixel electrode being applied with a voltage concurrently with the pixel electrode.

According to still another aspect of the invention, a method for producing a liquid crystal display panel comprising the steps of: forming a plurality of stripe-shaped electrodes each having a predetermined thickness on a first substrate, the plurality of stripe-shaped electrodes being used for applying a voltage to a liquid crystal layer; attaching the first substrate to a second substrate so as to interpose the plurality of electrodes between the first substrate and the second substrate so that the first substrate and the second substrate are maintained at a distance defined by the predetermined thickness; and filling an interspace created by the first substrate and the second substrate with liquid crystal.

In one another embodiment of the invention, the electrodes are formed by a plating method.

Thus, the invention described herein makes possible the advantages of (1) providing a liquid crystal display panel having improved viewing angle characteristics especially when displaying a black image; and (2) providing a liquid crystal display panel capable of high-quality display of gray scales by gradually varying the luminance of the displayed image in accordance with the value of the applied voltage.

These and other advantages of the present invention will become apparent to those skilled in the art upon reading and understanding the following detailed description with reference to the accompanying figures.

## BRIEF DESCRIPTION OF THE DRAWINGS

Figure **1A** is a plan view showing a configuration for a liquid crystal display panel according to a first example of the present invention.

Figure **1B** is a cross-sectional view showing the liquid crystal display panel shown in Figure **1A**.

Figure **2** is a schematic diagram showing the relative positions of a liquid crystal display panel and a polarizing plate for the liquid crystal display panel according to a first example of the present invention.

Figure **3** is a graph showing the viewing angle characteristics of a liquid crystal display panel according to a first example of the present invention when displaying a black image.

Figure **4** is a schematic diagram showing the relative positions of a liquid crystal display panel and a polarizing plate for the liquid crystal display panel according to a second example of the present invention.

Figure **5A** is a plan view showing a configuration for a liquid crystal display panel according to a third example of the present invention.

Figure **5B** is a cross-sectional view showing the liquid crystal display panel shown in Figure **5A**.

Figures **6A** to **6C** are views showing the fabrication steps for a liquid crystal display panel according to a third example of the present invention.

Figure **7** is a schematic diagram showing the relative positions of a liquid crystal display panel and a polarizing plate for the liquid crystal display panel according to a third example of the present invention.

Figures **8A** to **8D** are diagrams showing lines of electric force generated when a voltage is applied to a liquid crystal display panel according to the first and third examples of the present invention.

Figure **9A** is a plan view showing a configuration for a liquid crystal display panel according to a fourth example of the present invention.

Figures **9B** and **9C** are cross-sectional views showing the liquid crystal display panel shown in Figure **9A**.

Figure **10** is a view showing a chrome plating bath used in the fabrication of a liquid crystal display panel according to a fifth example of the present invention.

Figure **11** is a schematic diagram showing the optical properties of a liquid crystal display panel according to the present invention.

Figures **12A** and **12B** are diagrams showing the optical properties of a liquid crystal molecule.

Figure **13** is a schematic diagram showing the optical properties of a conventional liquid crystal display panel.

Figure **14** is a graph showing the viewing angle characteristics of a conventional liquid crystal display panel when displaying a black image.

## DESCRIPTION OF THE PREFERRED EMBODIMENTS

Hereinafter, the present invention will be described by way of examples, with reference to the accompanying drawings.

Example 1

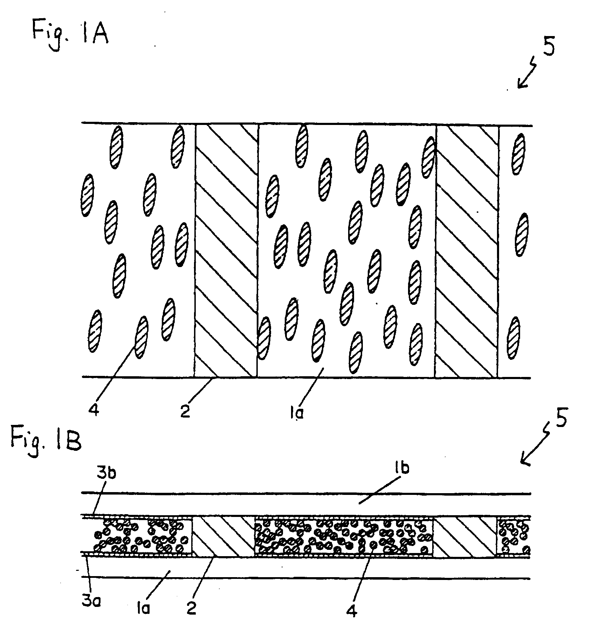

Figure **1A** is a plan view showing a liquid crystal display panel **5** according to a first example of the present invention. Figure **1B** shows a cross section of the liquid crystal display panel **5**.

As is shown in Figure **1B**, the liquid crystal display panel **5** includes a first substrate **1a**, a second substrate **1b**, and electrodes **2** interposed between the first substrate **1a** and the second substrate **1b**. The electrodes **2** have stripe shapes and are in contact with the first substrate **1a** and the second substrate **1b**. The first substrate **1a** and the second substrate **1b** are disposed at a distance defined by the thickness of each electrode **2**. The electrodes **2** are disposed parallel to one another. Alignment films **3a** and **3b** are disposed on facing surfaces of the first substrate **1a** and the second substrate **1b**, respectively. Nematic liquid crystal **4** is filled in the interspace created by the first substrate **1a**, the second substrate **1b**, and the electrodes **2**. The alignment films **3a** and **3b** are subjected to a rubbing treatment so that the nematic liquid crystal **4** has a homogeneous orientation.

The liquid crystal display panel **5** is fabricated in the following manner. An aluminum film (not shown) is formed on the entire face of the first substrate **1a** composed of transparent glass so as to have a thickness of about 3 $\mu$m. Next, the aluminum film is patterned to form the aluminum electrodes **2** (width: 10 $\mu$m; thickness: 3 $\mu$m) disposed on the first substrate **1a** at intervals of about 15 $\mu$m, by a photolithography method. The patterning is conducted with the use of a mask having a pattern consisting of strips each having a width of 10 $\mu$m disposed at regular intervals of 15 $\mu$m. The polyimide alignment film **3a** is formed by applying polyimide on the entire area of the upper face of the first substrate **1a** provided with the electrodes **2** by a printing method, and by allowing the polyimide to cure and dry. The resultant film is subjected to a rubbing treatment in a direction about 1° from the direction in which the electrodes **2** extend, by using rayon cloth, so as to form the polyimide alignment film **3a**.

The polyimide alignment film **3b** is formed by applying polyimide on the entire area of the upper face of the second substrate **1b** provided with the electrodes **2** by a printing method. By allowing the polyimide to cure and dry, the resultant film is subjected to a rubbing treatment so as to form the polyimide alignment film **3b**.

The rubbing treatment for the polyimide alignment film **3b** is conducted in such a direction that the liquid crystal molecules have a homogeneous orientation with respect to the alignment films **3a** and **3b** when the first substrate **1a** and the second substrate **1b** are attached to each other.

The first substrate **1a** provided with the electrodes **2** and the second substrate **1b** are attached to each other in such a manner that the face of the first substrate **1a** on which the alignment film **3a** is formed faces the face of the second substrate **1b** on which the alignment film **3b** is formed. As a result, a cell is formed. The cell has an interspace with a width of 3 $\mu$m, which corresponds to the thickness of each aluminum electrode **2**. Nematic liquid crystal (ZLI-4792; manufactured by Merck & Co., Inc.) having a refractive index anisotropy $\Delta$ n of 0.095 is injected into the interspace of the cell composed essentially of the first substrate **1a**, second substrate **1b**, and electrodes **2** so as to form the liquid crystal display panel **5**.

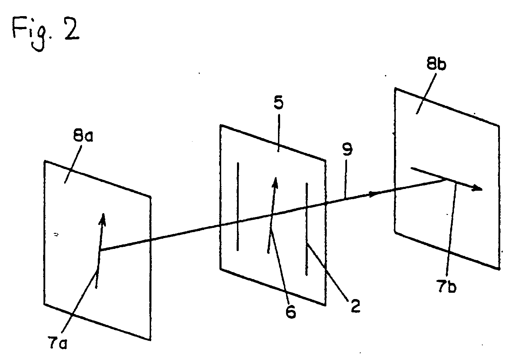

As is shown in Figure **2**, a first polarizing plate **8a** having a polarizing axis **7a** which is parallel to the direction **6** (hereinafter referred to as the 'rubbing direction') of the rubbing treatment conducted for the alignment films **3a** and **3b** is provided on one of the outer faces of the liquid crystal display panel **5** thus fabricated. On the other outer face of the liquid crystal display panel **5**, a second polarizing plate **8b** having a polarizing axis **7b** which is perpendicular to the polarizing axis **7a** is provided.

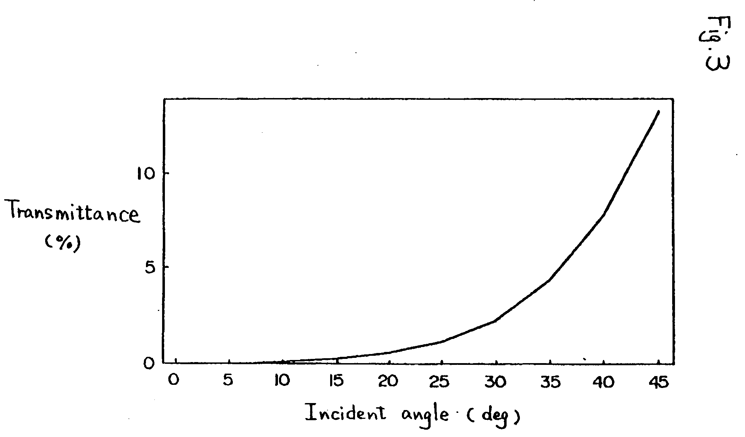

Hereinafter, measurement results of the viewing angle characteristics of the liquid crystal display panel **5** are described with reference to Figures **2** and **3**.

When a light beam **9** was incident to the liquid crystal display panel **5** in the direction of the normal axis of the substrates **1a** and **1b** as is shown in Figure **2**, the light beam **9** was completely interrupted by the second polarizing plate **8b**, whereby an excellent black image was displayed. Next, a light beam was incident to the liquid crystal display panel **5** at an angle of 45° with respect to the polarizing axis **7a** of the first polarizing plate **8a** in order to measure the amount of light transmitted through the liquid crystal display panel **5**, while the incident angle of the light beam was varied with respect to the normal axis of the substrates **1a** and **1b**. Thus, a transmittance-viewing angle characteristics curve shown in Figure **3** was obtained. As is seen from Figure **3**, it was learned that the transmittance was 10% or less when the incident angle was 40° or less, indicative of a black image being obtained in a wide range of incident angles. Thus, the liquid crystal panel **5** proved to have broad viewing angle characteristics.

Next, a pulsed voltage having a rectangular waveform of 30 Hz was applied between electrodes **2** separated by a distance of 15 $\mu$m, which caused the transmittance of the liquid crystal display panel **5** to start increasing. When the voltage was at about 7 V, a very bright display was attained in the vicinity of a middle point between the electrodes **2** although it was not quite as bright near the electrodes **2**. The luminescence of the middle point was derived as follows: A transmittance T was measured when no voltage was applied to the liquid crystal display panel **5**, with the polarizing axis **7b** of the polarizing plate **8b** being disposed parallel to the polarizing axis **7a** of the polarizing plate **8a**. The transmittance T was defined as 100% so as to be used as a value indicating a reference luminescence. It was learned that the abovementioned middle point between the electrodes **2** had a transmittance of 80% against the reference transmittance T.

As has been described, the liquid crystal display panel **5** according to the present example is capable of displaying white images and black images with excellent quality. The liquid crystal display panel **5** also has a high contrast ratio and broad viewing angle characteristics when displaying black images.

In the above-described example, the brightness of the liquid crystal display panel **5** when displaying a white image depends on an angle between the longer axis of each liquid crystal molecule and the polarizing axes when a voltage is applied. Linearly polarized light parallel to the polarizing axis **7b** of the second polarizing plate **8b** can be obtained under the following conditions: the polarizing axis **7a** of the first polarizing plate **8a** is perpendicular to the polarizing axis **7b** of the second polarizing plate **8b**; the liquid crystal display panel **5** is fabricated in such a manner that the retardation R (as a product of the refractive index anisotropy $\Delta$ n multiplied by a thickness d of the liquid crystal layer) equals a half of the wavelength $\lambda$ of the incident light; the longer axes of the liquid crystal molecules in the nematic liquid crystal **4** are all aligned at 45° with respect to the polarizing axis **7a**. In this case, ideally, the incident linearly polarized is transmitted by 100% through the liquid crystal display panel **5**, thereby providing a very bright white image.

However, in the present example, only a transmittance of about 80% is obtained when a voltage is applied to the liquid crystal display panel **5**. This is considered to be the result the liquid crystal molecules in the vicinity of the boundaries of the substrates being under the influence of a rotational anchoring force. Accordingly, it is preferable that the alignment films **3a** and **3b** are formed of alignment films having a weak anchoring.

For example, LB (Langmuir-Blodgett's) films composed of polyimide may be used for the alignment films **3a** and **3b**, whereby the anchoring force is reduced. In this case, a 90% transmittance is obtained in the vicinity of the middle point between the electrodes **2** by applying a voltage of about 7 V between the electrodes **2**. Moreover, it is also applicable to conduct a rubbing treatment alone for the surface of the substrates **1a** and **1b** without forming any alignment films on the substrates **1a** and **1b**.

Example 2

Hereinafter, a second example of the present invention will be described.

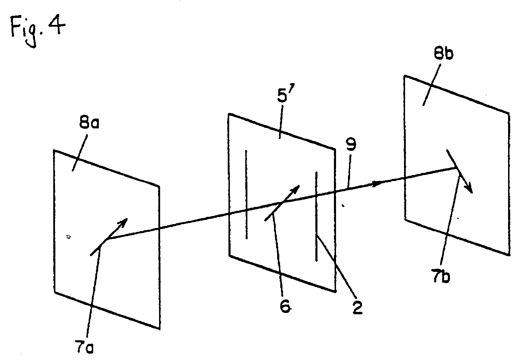

Figure **4** shows a liquid crystal display panel **5'** according to the second example of the present invention. The liquid crystal display panel **5'** is identical with the liquid crystal display panel **5** of Example 1 except for the rubbing directions of alignment films **3a** and **3b**. As is shown in Figure **4**, in the liquid crystal display panel **5'**, the alignment films **3a** and **3b** are subjected to a rubbing treatment in a direction about 45° from electrodes **2** that are disposed parallel to one another so as to achieve a homogeneous orientation.

A first polarizing plate **8a** having a polarizing axis **7a** which is parallel to the direction **6** (hereinafter referred to as the 'rubbing direction') of the rubbing treatment conducted for the alignment films **3a** and **3b** is provided on one of the outer faces of the liquid crystal display panel **5'**. On the other outer face of the liquid crystal display panel **5'**, a second polarizing plate **8b** having a polarizing axis **7b** which is perpendicular to the polarizing axis **7a** is provided. The other details of the configuration of the liquid crystal display panel **5'** are similar to those of the liquid crystal display panel **5**, and descriptions thereof are omitted accordingly.

First, a light beam was incident to the liquid crystal display panel **5'** interposed between the first polarizing plate **8a** and the second polarizing plate **8b** in the direction of the normal axis of the substrates **1a** and **1b**. The incident light was completely interrupted by the second alignment film **8b**, whereby an excellent black image was obtained. Next, a light beam was incident to the liquid crystal display panel **5'** at an angle of 45° with respect to the polarizing axis **7a** of the first polarizing plate **8a** in order to measure the amount of light transmitted through the liquid crystal display panel **5'**, while the incident angle of the light beam was varied with respect to the normal axis of the substrates **1a** and **1b**. Thus, a transmittance-viewing angle characteristics curve shown in Figure **3** was obtained, as in the case of Example 1. Thus, the liquid crystal panel **5'** proved to have broad viewing angle characteristics.

Next, a pulsed voltage having a rectangular waveform of 30 Hz was applied between electrodes **2** separated by a distance of 15 $\mu$m, which caused the transmittance of the liquid crystal display panel **5** to start increasing. When the voltage was at about 6 V, a very bright display was attained in a wide area ranging from near the middle point between the electrodes **2** to the vicinity of the electrodes **2**. It was learned that the above-mentioned area had a 90% transmittance of light against the reference transmittance T obtained in the same manner as in Example 1.

As has been described, the liquid crystal display panel **5'** according to the present example is capable of displaying white images and black images with excellent quality. The liquid crystal display panel **57** also has a high contrast ratio and broad viewing angle characteristics when displaying black images.

### Example 3

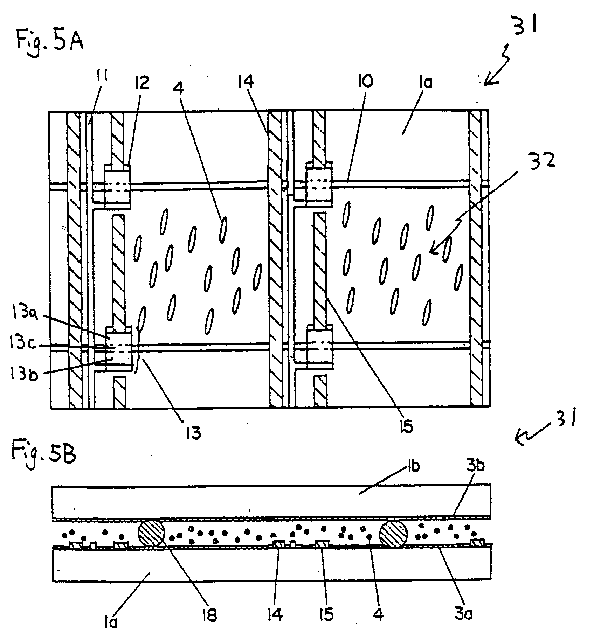

Figure **5A** is a plan view showing an active matrix type liquid crystal display panel **31** according to a third example of the present invention. Figure **5B** shows a cross section of the liquid crystal display panel **31**. The liquid crystal display panel **31** includes a plurality of pixels **32** disposed in a matrix shape. Each pixel **32** has a common electrode **14** formed on a first substrate **32** and extending in a first direction, and a pixel electrode **15** disposed in parallel to the common electrode **14**. The common electrode **14** and the pixel electrode **15** are formed substantially on the first substrate **1a**. The common electrode **14** of each pixel **32** is connected to the common electrode **14** of an adjoining pixel **32**, the two pixels **32** adjoining each other in the first direction.

Each pixel **32** further includes a source signal line **11** extending in the first direction, a gate scanning line **10** extending in a second direction, and a TFT **13** as a switching element. The second direction is substantially perpendicular to the first direction. The gate scanning line **10** of each pixel **32** is connected to the gate scanning line **10** of an adjoining pixel **32**, the two pixels **32** adjoining each other in the second direction. A portion of the gate scanning line **10** functions as a gate electrode of the TFT **13**. The source signal line **11** of each pixel **32** is connected to the source signal line **11** of an adjoining pixel **32**, the two pixels **32** adjoining each other in the first direction. A drain **13a** and a source **13b** of the TFT **13** are connected to, respectively, the pixel electrode **15** and the source signal line **11**. The common electrode **14** and the source signal line **11** are respectively positioned on a pair of opposing sides of a rectangle defined by the pixel **32**. The pixel electrode **15** is disposed adjoining the source signal line **11** nearer a center of the pixel **32** with respect to the source signal line **11**.

The liquid crystal display panel **31** further includes a second substrate **1b**. The first substrate **1a** and the second substrate **1b** are spaced at an appropriate distance with the use of glass beads **18**. Liquid crystal **4** is filled in the interspace between the first substrate **1a** and the second substrate **1b**. Alignment films **3a** and **3b** are disposed on facing surfaces of the first substrate **1a** and the second substrate **1b**, respectively.

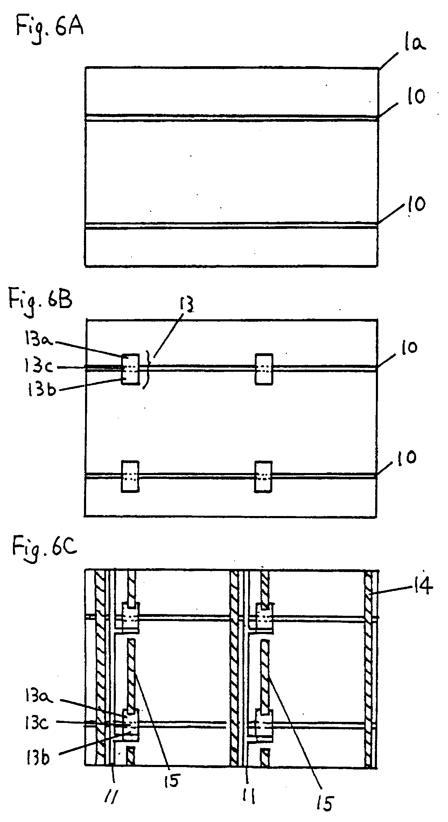

Hereinafter, a method for fabricating the liquid crystal display panel **31** will be described with reference to Figures **6A** to **6C**.

As is shown in Figure **6A**, the gate scanning linen **10** are formed by using chrome on the first substrate **1a**, which is made of glass. Next, a gate insulating film of silicon nitride (thickness: about 400 nm) is formed on the first substrate **1a** and the gate scanning lines **10** by using a plasma CVD (Chemical Vapor Deposition) method. As is shown in Figure **6B**, an amorphous silicon layer is formed to a thickness of about 60 nm by using a plasma CVD method. The resultant amorphous silicon layer is patterned and doped with an appropriate impurity, so as to form the drains **13a**, sources **13b**, and a channels **13c**. Thus, the TFTs **13**, of which gate electrodes are the gate scanning lines **10** located below the channels **13c**, have been formed.

A titanium film (thickness: about 200 nm) is formed on the entire face of the substrate **1a**. As is shown in Figure **6C**, the titanium film is patterned so as to form the common electrodes **14**, pixel electrodes **15**, and the source signal lines **11**. A portion of each pixel electrode **15** and a portion of each source signal line **11** are formed so as to overlap with and electrically connected with, respectively, the drain **13a** and source **13b** of the corresponding TFT **13**.

As is shown in Figure **5B**, the polyimide alignment film **3a** is formed in the following manner: Polyimide is applied on the entire area of the upper face of the first substrate **1a** by using a printing method, and is allowed to cure and dry. The resultant film is subjected to a rubbing treatment using a rayon cloth in the direction about 1° from the direction parallel to the pixel electrodes **15** and the common electrodes **14.**

Similarly, the polyimide alignment film **3b** is formed in the following manner: Polyimide is applied on the entire area of the upper face of the second substrate **1b**, and is allowed to cure and dry; the resultant film is subjected to a rubbing treatment by using rayon cloth. The rubbing treatment for the polyimide alignment film **3b** is conducted in such a direction that the liquid crystal molecules have a homogeneous orientation with respect to the alignment films **3a** and **3b** when the first substrate **1a** and the second substrate **1b** are attached to each other.

Next, the first substrate **1a** and the second substrate **1b** are attached to each other in such a manner that the faces thereof with the alignment films **3a** and **3b** interpose the glass beads **18** - (grain diameter: 3 $\mu$m). As a result, a cell is formed. The cell has the interspace with a width of 3.2 $\mu$m, which is substantially the same as the grain diameter of 3 $\mu$m of each glass bead **18**. Nematic liquid crystal (ZLI-4792; manufactured by Merck & Co., Inc.) having a refractive index anisotropy $\triangle$ n of 0.095 is injected into the 3.2 $\mu$m interspace of the cell thus fabricated, so as to form the liquid crystal display panel **5**.

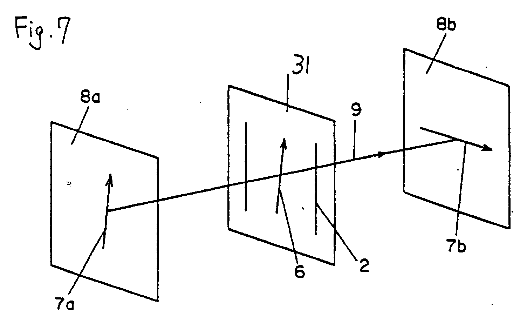

As is shown in Figure **7**, a first polarizing plate **8a** having a polarizing axis **7a** which is parallel to the rubbing direction of the rubbing treatment conducted for the alignment films **3a** and **3b** is provided on one of the outer faces of the liquid crystal display panel **31** thus fabricated. On the other outer face of the liquid crystal display panel **31**, a second polarizing plate **8b** having a polarizing axis **7b** which is perpendicular to the polarizing axis **7a** is provided.

A light beam was incident to the liquid crystal display panel **31** interposed between the alignment films **3a** and **3b** in the direction of the normal axis of the substrates **1a** and **1b**. The incident light was completely interrupted by the second polarizing film **8b**, whereby an excellent black image was obtained. Next, a light beam was incident to the liquid crystal display panel **31** at an angle of 45° with respect to the polarizing axis **7a** of the first polarizing plate **8a** in order to measure the amount of light transmitted through the liquid crystal display panel **31**, while the incident angle of the light beam was varied with respect to the normal axis of the substrates **1a** and **1b**. Thus, a transmittance-viewing angle characteristics curve similar to that of the liquid crystal display panel **5** of Example 1 was obtained.

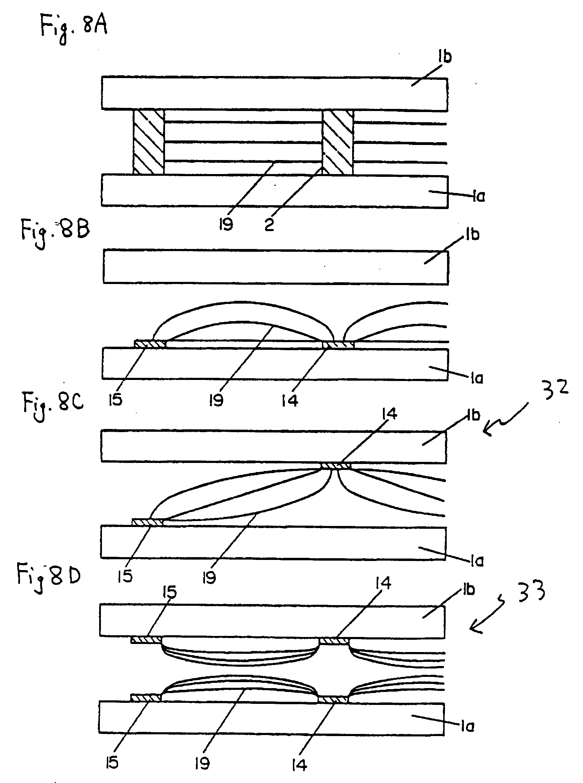

Next, a scanning signal was applied to the gate scanning lines **10** so that the TFTs **13** were turned on for 30 $\mu$s every time period of 16.7 ms. At the same time, a rectangular wave whose polarity changed every time period of 16.7 ms was applied between the source signal lines **11** and the common electrodes **14** so as to operate the liquid crystal display panel **31**. As the voltage amplitude of the rectangular wave that was applied between the source signal lines **11** and the common electrodes **14** was increased, the transmittance of the liquid crystal display panel **5** also started to increase. When the effective voltage was at about 7 V, a very bright display was attained in the vicinity of each middle point between the source signal lines **11** and the common electrodes **14** although it was not quite as bright near the source signal line **11** and the common electrode **14**. It was discovered that the above-mentioned middle point between the source signal line **11** and the common electrode **14** had a transmittance of 70% against the reference transmittance T, indicative of achievement of a sufficiently bright white image. However, this transmittance value is slightly lower than the 80% transmittance of the liquid crystal display panel **5** in Example 1. The reason for this difference will be described with reference to Figures **8A** and **8B**.

According to the liquid crystal display panel **5** of Example 1, each electrode **2** has a thickness substantially identical with the thickness of the liquid crystal layer. When a voltage is applied between the electrodes **2**, lines **19** of electric force emerge in parallel to the substrates **1a** and **1b**. This makes it possible for the longer axes of all the liquid crystal molecules to be aligned in parallel to the first substrate **1a** and the second substrate **1b**. On the other hand, according to the present example, the common electrodes **14** and the pixel electrodes **15** are formed only on the first substrate **1a**, as is shown in Figure **8B**. As a result, a voltage applied between a common electrode **14** and a pixel **15** generates lines **19** of electric force that are not in parallel to the substrates **1a** or **1b**. Since the longer axes of the liquid crystal molecules are liable to align in the direction of the lines **19** of electric force, the longer axes of the liquid crystal do not align in parallel to the substrates **1a** or **1b**. As a result, the polarizing modulation of the light transmitted through the liquid crystal layer has a slight difference, thereby causing the difference in light transmittance between the present example and Example 1.

The locations of the common electrodes **14** and the pixel electrodes **15** may be changed. Figure **8C** shows an exemplary liquid crystal display panel **32**. As is shown in Figure **8C** the liquid crystal display panel **32** includes pixel electrodes **15** formed substantially on a first substrate **1a** and common electrodes **14** formed substantially on a second substrate **1b**. It is also applicable to form the common electrodes **14** on the first substrate **1a** and to form the pixel electrodes **15** on the second substrate **1b**. By applying a rectangular wave having an effective voltage of 7 V between a common electrode **14** and a pixel electrode **15**, a transmittance of about 75% was achieved. Although this transmittance value is still slightly lower than the 80% transmittance of the liquid crystal display panel **5** of Example 1, a white image with a sufficient brightness was obtained by using the liquid crystal display panel **32**. It will be appreciated that, with no voltage applied, i.e. with no lines of electric force being generated, exactly the same orientation state of the liquid crystal molecules were attained, whereby an excellent black image was provided.

Figure **8D** shows an exemplary liquid crystal display panel **33**. As is shown in Figure **8D**, the liquid crystal display panel **33** includes a first substrate **1a** on which pixel electrodes **15** and common electrodes **14** are formed, and a second substrate **1b** on which pixel electrodes **15** and common electrodes **14** are formed. The liquid crystal display panel **33** is operated in such a manner that the pixel electrodes **15** formed on the first substrate **1a** are kept at the same potential level as the pixel electrodes **15** formed on the second substrate **1b**, and that the common electrodes **15** formed on the first substrate **1a** are kept at the same potential level as the common electrodes **15** formed on the second substrate **1b**. For example, the liquid crystal display panel **33** may be composed of a pair of the above-mentioned first substrates **1a** on which the TFTs **13**, the common electrodes **14**, and the pixel electrodes **15** are formed.

According to the liquid crystal display panel **33**, the directions of generated lines **19** of electric force are made almost parallel to the substrates **1a** and **1b**. By applying a rectangular wave having an effective voltage of 7 V between a common electrode **14** and a pixel electrode **15**, a transmittance of about 80% was achieved, thereby achieving a display with the same brightness as that provided by the liquid crystal display panel **5** of Example 1.

As has been described, the liquid crystal display panels according to the present example are capable of operating based on an active matrix type driving method. The liquid crystal display panels according to the present example are capable of displaying white images and black images with excellent quality, and have a high contrast ratio and broad viewing angle characteristics when displaying black images. It also proved possible to gradually change the transmittance for a given displayed image in the range of effective voltage from 2 V to 7 V, the voltage being applied between the source signal lines **11** and the common electrodes **14**, indicative of the aptitude of the liquid crystal display panels for displaying in gray scales.

Example 4

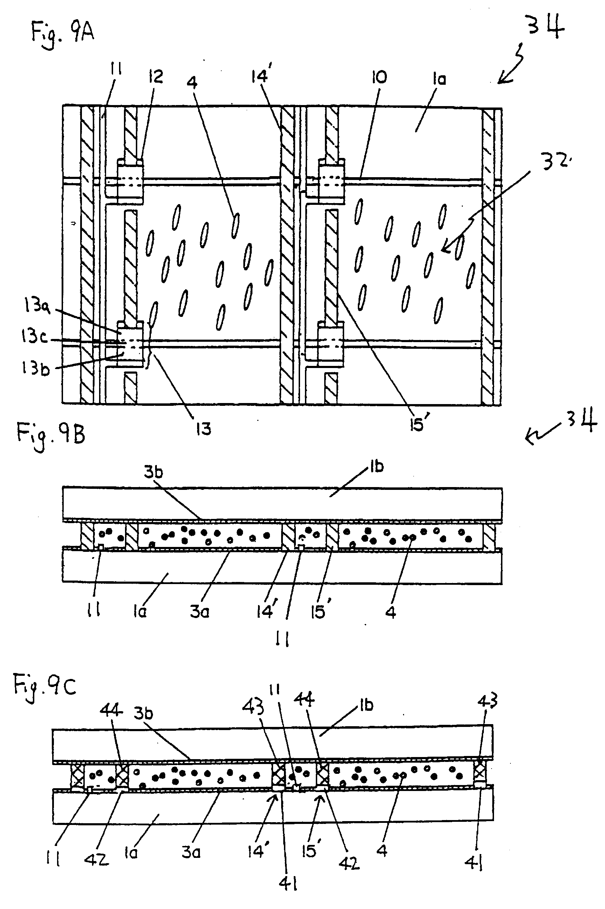

Hereinafter, a liquid crystal display panel **34** according to a fourth example of the present invention will be described with reference to Figures **9A** and **9B**. Figure **9A** is a plan view showing the liquid crystal display panel **34**. Figure **9B** shows a cross section of the liquid crystal display panel **34**. The liquid crystal display panel **34** includes a plurality of pixels **32'** disposed in a matrix shape. Each pixel **32'** has a common electrode **14'** formed on a first substrate **1a** and extending in a first direction, and a pixel electrode **15'** disposed in parallel to the common electrode **14'**. The common electrode **14'** and the pixel electrode **15'** are formed substantially on the first substrate **1a**. The common electrode **14'** of each pixel **32'** is connected to the common electrode **14'** of an adjoining pixel **32'**, the two pixels **32'** adjoining each other in the first direction. The common electrode **14'** and the source signal line **11** are respectively positioned on a pair of opposing sides of a rectangle defined by the pixel **32'**. The pixel electrode **15'** is disposed adjoining the source signal line **11** nearer the center of the pixel **32'** with respect to the source signal line **11'**.

Each pixel **32'** further includes a source signal line **11** extending in the first direction, a gate scanning line **10** extending in a second direction, and a TFT **13** as a switching element. The second direction is substantially perpendicular to the first direction. The gate scanning line **10** of each pixel **32'** is connected to the gate scanning line **10** of an adjoining pixel **32'**, the two pixels **32'** adjoining each other in the second direction. A portion of the gate scanning line **10** functions as a gate electrode of the TFT **13**. The source signal line **11** of each pixel **32'** is connected to the source signal line **11** of an adjoining pixel **32'**, the two pixels **32'** adjoining each other in the first direction. A drain **13a** and a source **13b** of the TFT **13** are connected to, respectively, the pixel electrode **15'** and the source signal line **11**.

The liquid crystal display panel **34** further includes a second substrate **1b**. The first substrate **1a** and the second substrate **1b** are spaced at an appropriate distance, with the common electrodes **14'** and the pixel electrodes **15'** functioning as spacers. In order to function as such spacers, each common electrodes **14'** and each the pixel electrodes **15'** have a height (thickness) of about 3 $\mu$m. Alignment films **3a** and **3b** are disposed on facing surfaces of the first substrate **1a** and the second substrate **1b**, respectively.

The liquid crystal display panel **34** is fabricated by substantially the same method as the fabrication method for the liquid crystal display panel **31** of Example 3.

A titanium film (thickness: about 200 nm) is formed on the entire face of the substrate **1a**. As is shown in Figure **9B**, the titanium film is patterned so as to form the source signal lines **11**. After forming an aluminum layer having a thickness of about 3 $\mu$m by vapor deposition, the common electrodes **14'** and the pixel electrodes **15'** are formed by a patterning method. A polyimide alignment film **3a** is formed by applying polyimide on the entire area of the upper face of the first substrate **1a** by using a printing method, and by allowing the polyimide to cure and dry; the resultant film is subjected to a rubbing treatment by using a rayon cloth in a direction about 1° from the direction parallel to the electrodes wiring, by using rayon cloth.

Similarly, a polyimide alignment film **3b** is formed by applying polyimide on the entire area of the upper face of the second substrate **1b**, and by allowing the polyimide to cure and dry; the resultant film is subjected to a rubbing treatment by using rayon cloth. The rubbing treatment for the polyimide alignment film **3b** is conducted in such a direction that liquid crystal molecules **4** have a homogeneous orientation with respect to the alignment films **3a** and **3b** when the first substrate **1a** and the second substrate **1b** are attached to each other.

Next, the first substrate **1a** provided with the electrodes **14'** and **15'** and the second transparent glass substrate **1b** are attached to each other in such a manner that the faces thereof provided with the alignment films **3a** and **3b** oppose each other. As a result, a cell is formed. The cell has an interspace with a width of 3 $\mu$m. Nematic liquid crystal (ZLI-4792; manufactured by Merck & Co., Inc.) having a refractive index anisotropy $\Delta$ n of 0.095 is injected into the 3 $\mu$m interspace of the cell thus fabricated, so as to form the liquid crystal display panel **34**. A first polarizing plate **8a** and a second polarizing plate **8b** are attached to the liquid crystal display panel **34** in the same manner as in Example 3.

A light beam was incident to the liquid crystal display panel **34** in the direction of the normal axis of the substrates **1a** and **1b**. The incident light was completely interrupted by the second polarizing film **8b**, whereby an excellent black image was obtained. Next, a light beam was incident to the liquid crystal display panel **34** at an angle of 45° with respect to a polarizing axis **7a** of the first polarizing plate **8a** in order to measure the amount of light transmitted through the liquid crystal display panel **34**, while the incident angle of the light beam was varied with respect to the normal axis of the substrates **1a** and **1b**. Thus, a transmittance-viewing angle characteristics curve similar to that of the liquid crystal display panel **5** of Example 1 was obtained, indicative of the broad viewing angle characteristics.

Next, the liquid crystal display panel **34** was operated based on an active matrix type driving method. As the voltage amplitude of a rectangular wave that was applied between the source signal line **11** and the common electrode **14'** was increased, the transmittance of the liquid crystal display panel **5** started to increase. When the effective voltage was at about 7 V, a very bright display was attained in the vicinity of the middle point between the source signal line **11** and the common electrode **14'** although it was not quite as bright near the source signal line **11** and the common electrode **14'**. It was confirmed that the above-mentioned middle point between the source signal line **11** and the common electrode **14'** had a transmittance of 80% against the reference transmittance T.

Thus, according to the liquid crystal display panel **34**, a voltage that is applied between a common electrode **14'** and a pixel electrode **15'** generates lines of electric force in the entire interspace between the substrates **1a** and **1b**, the lines of electric force being in parallel to the substrates **1a** and **1b**, thereby improving the light transmittance of the liquid crystal display panel **34**.

The common electrodes **14'** and the pixel electrodes **15'** may alternatively be formed by a plating method as follows:

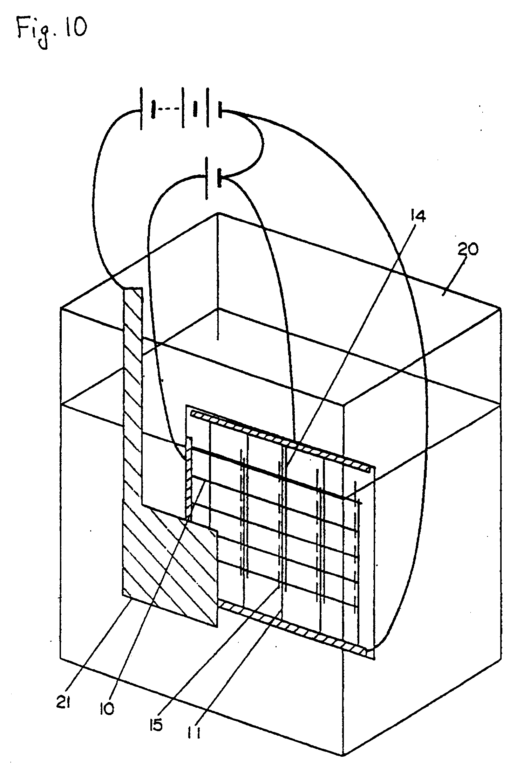

After forming the TFTs **30**, as is shown in Figure **9C**, a titanium film (thickness: about 200 $\mu$m) is formed on the entire face of the first substrate **1a**, and is patterned so as to form the source signal lines **11**, plating bases **41**, and plating bases **42**. Each plating base **41** has the same planar configuration as that of each common electrode **14'**. Each plating base **42** has the same planar configuration as that of each pixel electrode **15'**. The first substrate **1a** is soaked in a chrome plating bath **20** as shown in Figure **10**. A voltage of +3 V is applied to the gate electrodes **10** so as to operate the TFTs **30**, and a voltage is applied to an anode **21** at the same time so that the plating bases **41** and **42** become cathodes. A plating time and a current density are prescribed so that a chrome layer **43** and a chrome layer **44** are formed on each plating base **41** and each plating base **42**, respectively. A sargent bath may also be used for the chrome bath **20**. The chromic acid concentration is prescribed to be 400 g/l. It is possible to chrome-plate only the common electrode **14'**, without supplying a current to the source signal lines **11** and without applying a voltage to the gate electrodes **10**.

As is described in Examples 1 to 4, according to the present invention, a voltage is applied in parallel to the substrates. As the applied voltage increases, liquid crystal molecules which are aligned on the substrates with a parallel orientation move in such a manner that the longer axes thereof rotate around the normal axis direction as a rotation axis. The liquid crystal molecules align in the direction of the applied electric field when a high voltage is applied. Accordingly, the angle between the longer axis of each liquid crystal molecule and the polarizing axis of either polarizing plate can be freely varied in accordance with the value of the applied voltage.

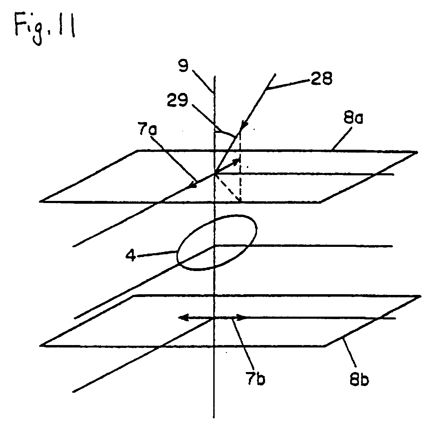

As is shown in Figure **11**, a black image is obtained by disposing the polarizing axis **7a** of a first polarizing plate **8a** in the direction of the longer axis of each liquid crystal molecule **4** having a parallel orientation and by disposing the polarizing axis **7b** of a second polarizing plate **8b** perpendicular to the polarizing axis **7a** of the first polarizing plate **8a**, the first and second polarizing plates **8a** and **8b** being disposed on the respective sides of the liquid crystal display panel. If the incident angle **29** of a light beam **28** entering the liquid crystal display panel is varied in the direction of the polarizing axis, the liquid crystal molecules **4** cause no birefringence, so that the liquid crystal display panel provides a black image with the same display quality as that of a black image when the light beam perpendicularly enters the liquid crystal display panel. Even if the light beam **28** enters the liquid crystal display panel at an angle of 45° with respect to the polarizing axis, the transmittance changes by only a small value depending on the incident angle (as is shown in Figure **3**), although a displayed black image is most likely to whiten up in this direction (i.e. 45° with respect to the polarizing axis). The light transmittance for a black image hardly changes unless the liquid crystal display panel is viewed from an extremely oblique angle. As will be appreciated, the characteristics curve shown in Figure **3** is very different from that of a conventional liquid crystal display panel shown in Figure **14**.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

**Claims**

1. A liquid crystal display panel comprising:
   a first substrate and a second substrate;
   a plurality of electrodes having a predetermined thickness and being interposed between the first substrate and the second substrate so as to maintain the first substrate and the second substrate at a distance defined by the predetermined thickness, the plurality of electrodes extending in a first direction and being disposed parallel to one another; and
   nematic liquid crystal filled in an interspace created by the plurality of electrodes and the first substrate and the second substrate,
   wherein an orientation of the nematic liquid crystal is varied by applying a voltage between the adjoining plurality of electrodes.

2. A liquid crystal display panel according to claim 1 further comprising alignment films formed on facing surfaces of the first substrate and the second substrate, the alignment films being rubbed in a cross direction to the first direction.

3. A liquid crystal display panel according to claim 2, wherein the alignment films are Langmuir-Blodgett's films.

4. A liquid crystal display panel comprising:
   a first substrate and a second substrate maintained substantially parallel to each other;
   nematic liquid crystal filled in an interspace between the first substrate and the second substrate;
   a plurality of first electrodes formed on a face of the first substrate that is in contact with the nematic liquid crystal, the plurality of first electrodes extending in a first direction;
   a plurality of second electrodes formed on a face of the second substrate that is in contact with the nematic liquid crystal so as not to be located above the plurality of first electrodes, the plurality of second electrodes extending in the first direction,
   wherein an orientation of the nematic liquid crystal is varied by applying a voltage between the plurality of first electrodes and the plurality of second electrodes.

5.  A liquid crystal display panel comprising:
    a first substrate and a second substrate maintained substantially parallel to each other;
    nematic liquid crystal filled in an interspace between the first substrate and the second substrate;
    a plurality of first electrodes formed on a face of the first substrate that is in contact with the nematic liquid crystal and a face of the second substrate that is in contact with the nematic liquid crystal, the plurality of first electrodes extending in a first direction and each of the first electrodes formed on the first substrate opposing one of the first electrodes formed on the second substrate; and
    a plurality of second electrodes formed on a face of the second substrate that is in contact with the nematic liquid crystal and a face of the second substrate that is in contact with the nematic liquid crystal, the plurality of second electrodes extending in a first direction and each of the second electrodes formed on the first substrate opposing one of the second electrodes formed on the second substrate;
    wherein an orientation of the nematic liquid crystal is varied by applying a voltage between at least one of the first electrodes and at least one of the second electrodes.

6.  A liquid crystal display panel comprising a plurality of pixels in a matrix shape, each of the plurality of pixels including:
    a first substrate and a second substrate maintained substantially parallel to each other;
    nematic liquid crystal filled in an interspace between the first substrate and the second substrate;
    a source signal line formed on one of two opposing sides of a rectangle defined by the pixel, the source signal line extending in a first direction;
    a stripe-shaped common electrode formed on at least one of the first substrate and the second substrate and disposed on the other one of the rectangle defined by the pixel, the common electrode extending in the first direction;
    a gate scanning line formed on the first substrate and extending in a second direction;
    a thin film transistor having a source, a drain, a portion of the gate scanning line as a gate electrode, the source electrically connected with the source signal line, the thin film transistor being formed on the first substrate; and
    a stripe-shaped pixel electrode formed on the first substrate and disposed adjoining the source signal line nearer a center of the pixel with respect to the source signal line, the pixel electrode extending in the first direction and being electrically connected with the drain, wherein the pixel electrode is used for applying an electric field to the nematic liquid crystal in accordance with an operation of the thin film transistor.

7.  A liquid crystal display panel according to claim 6, wherein each of the pixel electrode and the common electrode has a predetermined thickness so as to maintain the first substrate and the second substrate at a distance defined by the predetermined thickness.

8.  A liquid crystal display panel according to claim 6, wherein each pixel further includes a second pixel electrode formed in a portion of the second substrate corresponding to a portion where the pixel electrode is formed, the second pixel electrode being applied with a voltage concurrently with the pixel electrode.

9.  A method for producing a liquid crystal display panel comprising the steps of:
    forming a plurality of stripe-shaped electrodes each having a predetermined thickness on a first substrate, the plurality of stripe-shaped electrodes being used for applying a voltage to a liquid crystal layer;
    attaching the first substrate to a second substrate so as to interpose the plurality of electrodes between the first substrate and the second substrate so that the first substrate and the second substrate are maintained at a distance defined by the predetermined thickness; and
    filling an interspace created by the first substrate and the second substrate with liquid crystal.

10. A method according to claim 9, wherein the electrodes are formed by a plating method.

Fig. 1A

5

4    2    1a

Fig. 1B

5

3b    1b

3a    1a    2    4

Fig. 2

Fig.3

Fig. 4

Fig. 5A

31

11  12  4  14  10  1a

32

13a
13c
13b

13

15

Fig. 5B

31

1b  3b

1a  18  14  15  4  3a

Fig. 6A

Fig. 6B

Fig. 6C

Fig.7

Fig. 8A

Fig. 8B

Fig. 8C

Fig. 8D

Fig. 9A

Fig. 9B

Fig. 9C

Fig. 10

Fig. 11

Fig. 12 A

Fig 12B

Fig. 13
PRIOR ART

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-3 981 559 (CHANNIN DONALD JONES)<br>* column 8, line 18 - line 38 *<br>* claims 9,11,12; figure 11A * | 5 | G02F1/1343<br>G02F1/1339<br>G02F1/136 |
| X | FR-A-2 288 363 (DAINI SEIKOSHA KK )<br>* page 1, line 1 - line 39 *<br>* claims; figures * | 4,5 | |
| X | PATENT ABSTRACTS OF JAPAN<br>vol. 016, no. 377 (P-1401) 12 August 1992<br>& JP-A-04 119 321 (SUSUMU SATO) 20 April 1992<br>* abstract; figures 1-2 * | 4,5 | |
| X | GB-A-2 069 213 (CITIZEN WATCH CO LTD)<br>* page 5, line 16 - line 27 *<br>* claims 1,2,8; figures 6,8 * | 6 | |
| P,X | EP-A-0 588 568 (HITACHI LTD )<br>* abstract *<br>* column 1, line 1 - column 4, line 43 *<br>* column 8, line 18 - column 9, line 14 *<br>* claims 1-4,24-26; figures 1,2,4,5,16 * | 6,8 | TECHNICAL FIELDS SEARCHED (Int.Cl.5)<br><br>G02F |
| A | JOURNAL OF APPLIED PHYSICS.,<br>vol.45, no.12, December 1974, NEW YORK US<br>pages 5466 - 5468<br>Soref R A 'Field effects in nematic liquid crystals obtained with interdigital electrodes'<br>* the whole document * | 1,4-6 | |
| A | PATENT ABSTRACTS OF JAPAN<br>vol. 013, no. 329 (P-904) 25 July 1989<br>& JP-A-01 094 320 (MATSUSHITA ELECTRIC IND CO LTD) 13 April 1989<br>* abstract * | 9,10 | |

The present search report has been drawn up for all claims

| Place of search | Date of completion of the search | Examiner |
|---|---|---|
| THE HAGUE | 11 July 1994 | Iasevoli, R |

EPO FORM 1503 03.82 (P04C01)